# EUROPEAN PATENT APPLICATION

(11) **EP 4 386 426 A1**
(43) Date of publication of application: **19.06.2024**
(21) Application number: 22867194.7
(22) Date of filing: 23.08.2022
(51) Int. Cl.: G01S 7/03, B32B 5/18, B32B 7/025, B60R 13/00, B60R 13/04, H01Q 1/42

(54) **RADIO WAVE TRANSMITTING MEMBER, EMBLEM, AND OBJECT DETECTING STRUCTURE**

(30) Priority: 08.09.2021 JP 2021146417
(71) Applicant: Resonac Corporation, Tokyo 105-7325 (JP)
(72) Inventor: MITSUISHI, Naoko, Tagawa-shi, Fukuoka 825-0005 (JP); FUJINO, Hiroaki, Tagawa-shi, Fukuoka 825-0005 (JP); NAKANO, Shingo, Tagawa-shi, Fukuoka 825-0005 (JP); SHIOKAWA, Hirofumi, Tagawa-shi, Fukuoka 825-0005 (JP); IWANAGA, Masahiro, Tagawa-shi, Fukuoka 825-0005 (JP); MORIHARA, Masumi, Tagawa-shi, Fukuoka 825-0005 (JP)
(74) Representative: Hoffmann Eitle
(86) International application number: PCT/JP2022/031757
(87) International publication number: WO 2023/037872

(57) **Abstract**

A radio wave transmitting member, including, in order, an outer layer, an intermediate layer and an inner layer, the intermediate layer including an elastic body, and the elastic body being in a constantly compressed state.

## Description

### Technical Field

The present disclosure relates to a radio wave transmitting member, an emblem, and an object detecting structure.

### Background Art

There have been remarkable improvements in safety systems for automobiles in recent years. For example, automatic collision-avoidance systems have become standard equipment for automobiles.

An automatic collision-avoidance system is a system that functions to brake automatically based on image data, which is obtained from a car camera, and on information on the relative distance between a car body and an object, which is obtained from a millimeter-wave radar.

The transceiver of a millimeter-wave radar is preferably disposed at the center of the front of a car body. Generally, an emblem is disposed at the center of the front of a car body. Therefore, the transceiver of a millimeter-wave radar is preferably disposed behind an emblem of a car body.

Emblems for automobiles generally have, on a substrate made of resin or the like, a metal film for effecting a metallic sheen. For example, Japanese Patent Application Laid-Open No. 2003-019765 describes a method for forming a metal film on a substrate by a silver mirror reaction.

### Summary of the Invention

### Problems to be Solved by the Invention

From the viewpoint of securing sufficient performance by an automatic collision-avoidance system, the attenuation of radio waves while passing through an emblem is preferably suppressed as much as possible.

In view of the foregoing, the present disclosure aims to provide a radio wave transmitting member, an emblem, and an object detecting structure in which transmission attenuation of radio waves is suppressed.

### Means for Solving the Problem

Specific means for implementing the problem include the following embodiments.
<1> A radio wave transmitting member, comprising, in order, an outer layer, an intermediate layer and an inner layer, the intermediate layer comprising an elastic body, and the elastic body being in a constantly compressed state.
<2> The radio wave transmitting member according to <1>, wherein the intermediate layer comprises a resin in a foamed state.
<3> The radio wave transmitting member according to <1> or <2>, wherein each of the outer layer and the inner layer comprises a resin.
<4> The radio wave transmitting member according to any one of <1> to <3>, further comprising a metal layer that is transmissive with respect to radio waves.
<5> The radio wave transmitting member according to <4>, wherein the metal layer is disposed between the outer layer and the intermediate layer or between the inner layer and the intermediate layer.
<6> The radio wave transmitting member according to any one of <1> to <5>, the radio wave transmitting member being configured to transmit radio waves with a frequency of from 20 GHz to 300 GHz.
<7> An emblem, comprising the radio wave transmitting member according to any one of <1> to <6>.
<8> An object detecting structure, comprising the radio wave transmitting member according to any one of <1> to <6> and a device that emits radio waves toward the radio wave transmitting member.

### Effect of the Invention

According to the present disclosure, a radio wave transmitting member, an emblem, and an object detecting structure, in which transmission attenuation of radio waves is suppressed, are provided.

### Brief Explanation of the Drawing

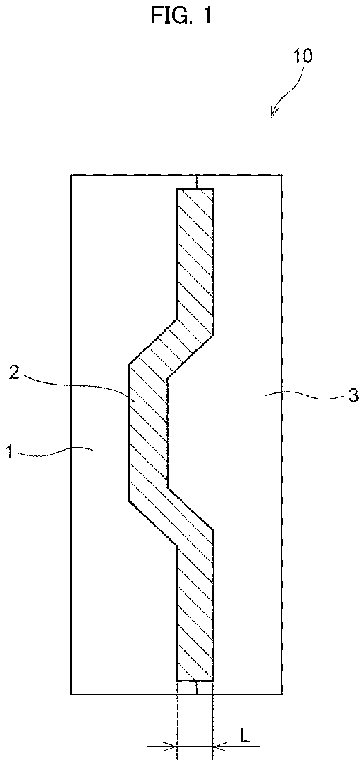

Figure 1 is a schematic sectional view of an exemplary configuration of a radio wave transmitting member.

### Embodiments for Implementing the Invention

Embodiments for carrying out the present disclosure will now be described in detail. However, the present disclosure is in no way limited to the following embodiments.

In the following embodiments, constituent elements (including element steps and the like) of the embodiments are not essential, unless otherwise specified. Likewise, numerical values and ranges thereof are not intended to restrict the invention.

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, the term "layer" or "film" includes, when a region where a layer or a film is present is observed, a case in which a layer is formed at a portion of the region, in addition to a case in which a layer is formed at an entire region.

In the present disclosure, the particle corresponding to each component may include plural kinds of particles.

In the present disclosure, the term "(meth)acrylic" includes both acrylic and methacrylic.

### <Radio wave transmitting member>

The radio wave transmitting member according to the present disclosure includes, in order, an outer layer, an intermediate layer and an inner layer, the intermediate layer including an elastic body, and the elastic body being in a constantly compressed state.

The radio wave transmitting member according to the present disclosure has a configuration in which an outer layer, an intermediate layer and an inner layer are layered in this order, on the grounds of securing sufficient strength, ease of production, and the like.

Since the volume of each layer constituting the radio wave transmitting member may vary depending on temperature changes or the like, a gap may be created between the outer layer and the intermediate layer, or between the inner layer and the intermediate layer. When the radio wave transmitting member has a gap between the outer layer and the intermediate layer, or between the inner layer and the intermediate layer, reflection of radio waves may occur at an interface of the layers, and the amount of attenuation of radio waves while passing through the radio wave transmitting member may increase.

In the radio wave transmitting member according to the present disclosure, the intermediate layer includes an elastic body. The elastic body may deform depending on the changes in a distance between the outer layer and the inner layer, thereby suppressing creation of a gap between the outer layer and the intermediate layer, or between the inner layer and the intermediate layer. As a result, the amount of attenuation of radio waves while passing through the radio wave transmitting member is effectively suppressed. Further, by including an elastic body in the intermediate layer, it becomes easier to select the materials suitable for each of the outer layer, intermediate layer and inner layer in an independent manner (for example, selecting materials having different thermal expansion coefficients for respective layers).

In the present disclosure, the "elastic body" refers to an object having an ability to deform depending on a change in a distance between the outer layer and the inner layer. The deformation of an elastic body includes deformation depending on a decrease in a distance between the outer layer and the inner layer (compression) and deformation depending on an increase in a distance between the outer layer and the inner layer (restoration).

Figure 1 is a schematic sectional view illustrating an exemplary configuration of a radio wave transmitting member.

In Figure 1, the radio wave transmitting member 10 has an outer layer 1, an intermediate layer 2, and an inner layer 3, in this order. The radio wave transmitting member 10 allows radio waves emitted from a device for emitting ratio waves (not shown) to pass through, and allows radio waves reflected at an object to pass through.

The outer layer 1 is disposed at a side opposite to a device that emits ratio waves toward the radio wave transmitting member 10. The inner layer 3 is disposed at a side facing a device that emits radio waves toward the radio wave transmitting member 10. The intermediate layer 2 includes an elastic body, and the elastic body is deformable depending on a distance L between the outer layer 1 and the inner layer 3.

In the radio wave transmitting member according to the present disclosure, the elastic body included in the intermediate layer is constantly compressed, in order to suppress creation of a gap between the outer layer and the intermediate layer or between the inner layer and the intermediate layer.

The state of an elastic body in the intermediate layer being constantly compressed may be realized by determining a thickness of the elastic body, when it is disposed between the outer layer and the inner layer, to be constantly smaller than a thickness of the elastic body when it is not disposed between the outer layer and the inner layer (i.e., when a stress is not applied to the elastic body).

In that case, the "state of being constantly compressed" of the elastic body refers to a state in which the elastic body is compressed at any temperature ranges in an environment in which the radio wave transmitting member is used.

From the viewpoint of effectively suppressing creation of a gap between the outer layer and the intermediate layer, or between the inner layer and the intermediate layer, the percent of a volume of the elastic body with respect to a volume of the intermediate layer is preferably 70% or more, more preferably 80% or more, further preferably 90% or more, yet further preferably 100%.

From the viewpoint of a balance between the strength and a degree of radio wave transmissivity, each of the outer layer, intermediate layer and inner layer preferably includes a resin (in that case, a resin included in the intermediate layer should be an elastic body).

Examples of the resin that may be included in the outer layer, intermediate layer and inner layer include thermosetting resins, thermoplastic resins, and synthetic rubbers.

In order to impart an ability as an elastic body, the resin included in the intermediate layer may be in a foamed state.

Examples of the thermoplastic resin include polyethylene, polypropylene, polycarbonate (PC), polystyrene, polyvinyl chloride, vinyl polymers, polyester, polyamide, acrylonitrile-butadiene-styrene copolymer resin (ABS resin), (meth)acrylic resin, acrylonitrile-ethylene-propylene-diene-styrene copolymer resin (AES resin), and thermoplastic elastomers.

Examples of the thermosetting resin include silicone resin, urethane resin, melamine resin, epoxy resin, phenol resin, and urea resin.

Examples of the synthetic resin include ethylene-propylene-diene rubber (EPDM), acrylonitrile-butadiene rubber (NBR), isoprene rubber (IR), butadiene rubber (BR), styrenebutadiene rubber (SBR), chloroprene rubber (CR), silicone rubber, and urethane rubber.

Among these resins, PC, polypropylene, ABS resin, (meth)acrylic resin and AES resin are preferred, and PC, polypropylene and ABS resin are more preferred.

PC is highly resistant to impact, highly resistant to heat, and highly transparent. Further, PC is readily processed, relatively light in weight among resins, and durable.

Polypropylene is relatively light in weight among resins and is readily processed. Further, polypropylene has a high degree of tensile strength, a high degree of impact strength, and a high degree of compression strength, and has excellent weather resistance and heat resistance.

ABS resin is relatively compatible with surface treatment, such as coating after molding. Further, ABS resin has excellent chemical resistance, stiffness, impact resistance, heat resistance and cold resistance.

When each of the outer layer, intermediate layer and inner layer independently includes a resin, the layers may include a resin alone, or may include a resin and a component other than a resin.

Examples of a component other than a resin include inorganic particles, a colorant and an antistatic agent.

When each of the outer layer, intermediate layer and inner layer independently includes a resin and a component other than a resin, the content of a resin in the outer layer, intermediate layer and inner layer is preferably 60% by mass or more, more preferably 70% by mass or more, further preferably 80% by mass or more, particularly preferably 90% by mass or more.

The thickness of the outer layer, intermediate layer and inner layer is not particularly limited as long as an elastic body included in the intermediate layer is constantly compressed, and may be determined depending on the purpose of the radio wave transmitting member or the wavelength of radio waves to pass through the radio wave transmitting member.

The thickness of the outer layer may be from 1.5 mm to 6.0 mm, from 1.8 mm to 4.5 mm, or from 2.0 mm to 4.0 mm.

The thickness of the intermediate layer may be from 0.1 mm to 3.0 mm, from 0.3 mm to 1.5 mm, or from 0.5 mm to 1.0 mm.

The thickness of the inner layer may be from 1.5 mm to 6.0 mm, from 1.8 mm to 5.5 mm, or from 2.0 mm to 5.0 mm.

When the outer layer, intermediate layer and inner layer are a layer including a resin, the relative permittivity thereof may be independently from 2.0 to 3.3, from 2.3 to 2.9, or from 2.5 to 2.8.

In the present disclosure, the thickness of the radio wave transmitting member or a layer constituting the radio wave transmitting member refers to a dimension measured in a layering direction of the layers constituting the radio wave transmitting member.

In the present disclosure, the thickness of the radio wave transmitting member or a layer constituting the radio wave transmitting member may be measured by a known method. For example, the thickness may be measured by observing a section of the radio wave transmitting member, or may be measured with a microtome or the like.

The radio wave transmitting member may have a metal layer that is transmissive with respect to radio waves. A metallic sheen can be imparted to the radio wave transmitting member by disposing a radio wave-transmissive metal layer to the radio wave transmitting member.

When the radio wave transmitting member has a radio wave-transmissive metal layer, the radio wave-transmissive metal layer is preferably disposed between the outer layer and the intermediate layer, or between the inner layer and the intermediate layer.

Examples of the radio wave-transmissive metal layer includes a film including metal particles. When the metal layer includes metal particles, it is possible to allow radio waves to pass through a gap between the metal particles.

The metal layer may be a metal layer including silver particles. The metal layer including silver particles may be formed by silver mirror reaction, for example.

Examples of a method for forming a metal layer by silver mirror reaction include a method in which an aqueous solution of ammoniacal silver nitrate and an aqueous solution of a reducing agent are allowed to contact with each other, on a substrate. The contact of the aqueous solutions causes redox reaction and precipitation of silver particles, thereby forming a metal layer including silver particles on a substrate.

When a metal layer is disposed between the outer layer and the intermediate layer by a method as stated above, a component that constitutes the outer layer may be used as a substrate.

When a metal layer is disposed between the inner layer and the intermediate layer by a method as stated above, a component that constitutes the inner layer may be used as a substrate.

From the viewpoint of radio wave transmissivity, the thickness of a metal layer is preferably 1000 nm or less, more preferably 500 nm or less, further preferably 100 nm or less.

From the viewpoint of imparting a sufficient metallic sheen to the radio wave transmitting member, the thickness of a metal layer is preferably 10 nm or more.

When a metal layer is disposed between the outer layer and the intermediate layer, or between the inner layer and the intermediate layer, an undercoat layer may be disposed between the outer layer and the metal layer, or between the inner layer and the metal layer, in order to improve the adhesion between the outer layer and the metal layer or between the inner layer and the metal layer.

Alternatively, a protection layer may be disposed on a metal layer in order to protect a surface of the metal layer.

Examples of an undercoat layer or a protection layer include a layer including a resin, and examples of the resin include fluorine resin, polyester resin, epoxy resin, melamine resin, silicone resin, acrylic silicone resin, and acrylic urethane resin.

The thickness of an undercoat layer or a protection layer is preferably independently from 1 µm to 50 µm. When the thickness of an undercoat layer or a protection layer is from 1 µm to 50 µm, it is possible to achieve a sufficient effect of suppressing the amount of attenuation of radio waves by controlling the thickness of the outer layer, intermediate layer and inner layer.

The type of radio waves for the radio wave transmitting member to transmit is not particularly limited. For example, the radio wave may be millimeter waves.

In the present disclosure, the millimeter waves refers to radio waves with a frequency of from 20 GHz to 300 GHz. The radio wave transmitting member according to the present disclosure is especially effective at suppressing the attenuation of millimeter waves.

### <Emblem>

The emblem according to the present disclosure is an emblem that includes the radio wave transmitting member as described above.

In the emblem according to the present disclosure, the attenuation of radio waves while passing through the emblem is suppressed. Therefore, for example, even when an emblem is disposed at the front of a car body at which a transceiver of a millimeter-wave radar is disposed, the functions of a millimeter-wave radar are maintained in a good state.

The emblem according to the present disclosure is disposed at a car body of an automobile such that the outer layer of the radio wave transmitting member faces outward.

The emblem may have a concave-convex shape for expressing a character, a designed graphic, or the like.

### <Object detecting structure>

The object detecting structure according to the present disclosure includes the radio wave transmitting member as described above, and a device that emits radio waves toward the radio wave transmitting member.

In the object detecting structure according to the present disclosure, attenuation of radio waves while passing through the radio wave transmitting member is suppressed. Therefore, the object detecting structure exhibits excellent detection properties.

The object detecting structure according to the present disclosure may be suitably used for an automatic collision-avoidance system (preferably an automatic collision-avoidance system employing millimeter waves) for automobiles.

The disclosure of Japanese Patent Application No. 2021-146417 is incorporated herein by reference in its entirety.

All publications, patent applications, and technical standards mentioned in the present specification are incorporated herein by reference to the same extent as if each individual publication, patent application, or technical standard was specifically and individually indicated to be incorporated by reference.

## Claims

1. A radio wave transmitting member, comprising, in order, an outer layer, an intermediate layer and an inner layer, the intermediate layer comprising an elastic body, and the elastic body being in a constantly compressed state.

2. The radio wave transmitting member according to claim 1, wherein the intermediate layer comprises a resin in a foamed state.

3. The radio wave transmitting member according to claim 1 or claim 2, wherein each of the outer layer and the inner layer comprises a resin.

4. The radio wave transmitting member according to any one of claim 1 to claim 3, further comprising a metal layer that is transmissive with respect to radio waves.

5. The radio wave transmitting member according to claim 4, wherein the metal layer is disposed between the outer layer and the intermediate layer or between the inner layer and the intermediate layer.

6. The radio wave transmitting member according to any one of claim 1 to claim 5, the radio wave transmitting member being configured to transmit radio waves with a frequency of from 20 GHz to 300 GHz.

7. An emblem, comprising the radio wave transmitting member according to any one of claim 1 to claim 6.

8. An object detecting structure, comprising the radio wave transmitting member according to any one of claim 1 to claim 6 and a device that emits radio waves toward the radio wave transmitting member.
